## Europäisches Patentamt

# European Patent Office

## Office européen des brevets

(11) Numéro de publication: **0 104 980**

**B1**

(12) # FASCICULE DE BREVET EUROPÉEN

(45) Date de publication du fascicule du brevet:
**23.07.86**

(21) Numéro de dépôt: **83401742.8**

(22) Date de dépôt: **02.09.83**

(51) Int. Cl.⁴: **F 16 B 29/00**

(54) Bouchon expansible.

(30) Priorité: **03.09.82 FR 8215032**

(43) Date de publication de la demande:
**04.04.84 Bulletin 84/14**

(45) Mention de la délivrance du brevet:
**23.07.86 Bulletin 86/30**

(84) Etats contractants désignés:
**BE CH DE FR LI SE**

(56) Documents cité:
**CH-A-358 991**
**FR-A-1 211 818**
**FR-A-1 343 577**
**US-A-2 385 126**
**US-A-3 267 793**

(73) Titulaire: **FRAMATOME ET CIE., Tour Fiat 1, Place de la Coupole, F-92400 Courbevoie (FR)**

(72) Inventeur: **Le Dantec, Olivier, 78 rue Cuvier, F-69006 Lyon (FR)**
Inventeur: **Balage, Charly, Résidence Beaufort, F-69007 Lyon (FR)**

(74) Mandataire: **Lavoix, Jean, c/o Cabinet Lavoix 2, Place D'Estienne D'Orves, F-75441 Paris Cedex 09 (FR)**

EP 0 104 980 B1

## Description

La présente invention concerne un bouchon expansible, c'est à dire un appareil amovible pouvant être installé rigidement à l'intérieur d'un orifice ménagé dans une paroi afin d'obturer cet orifice.

Parmi les bouchons expansibles existants, certains sont constitués d'une matière élastique et sont introduits dans l'orifice à obturer en agissant en force, le maintien du bouchon étant obtenu par les forces radiales s'exerçant sur les parois de l'orifice. De tels dispositifs présentent l'inconvénient de nécessiter l'utilisation de matériaux qui en général résistent mal à la température et vieillissent rapidement. D'autre part de tels bouchons sont difficiles à poser parce qu'ils nécessitent des appareillages compliqués pour exercer les forces importantes d'introduction du bouchon à l'intérieur de l'orifice.

D'autres bouchons comportent des ensembles mécaniques traversant de part en part l'orifice à obturer et nécessitant une intervention manuelle de part et d'autre de la paroi comportant l'orifice; une telle intervention de part et d'autre de la paroi n'est pas toujours possible. D'autre part, il est difficile de concevoir un système de mise en place de tels bouchons à l'aide d'un appareil télécommandé du fait du nombre important des opérations à effectuer pour la mise en place du bouchon.

D'autres bouchons expansibles comportent des moyens de fixation agissant uniquement par friction. De tels dispositifs sont en général peu fiables car le maintien dans l'orifice dépend du coefficient de frottement des pièces avec les parois de l'orifice. Or ce coefficient peut varier, par exemple, en fonction des variations de température, des vibrations ou de la présence de fluide. Un glissement est donc toujours possible.

On connaît aussi, par exemple par le US—A—3.267.793, des dispositifs dans lesquels une pièce élastique d'agrippage peut passer à l'intérieur du trou pour ressortir de l'autre côté de la paroi, et dans lesquels un système à vis permet d'expanser les parties élastiques de la pièce débordant du trou de façon à venir leur faire prendre appui sur la face arrière non accessible de la paroi. Mais de tels dispositifs obligent, pour permettre l'expansion de certaines parties de la pièce d'agrippage, à prévoir des parties de résistance plus faible et on peut craindre que des ruptures s'y produisent, surtout en cas de fortes variations de température ou en cas de vibrations.

On connaît enfin, par exemple par le FR—A—1.211.818 ou le FR—A—1.343.577, des dispositifs de verrouillage de bouchons dans un canal, dispositifs utilisant des pièces d'agrippage articulées sur le bouchon et susceptibles d'être chacune amenée en position d'expansion en pivotant autour de son axe pour que son autre extrémité vienne déborder au delà de la paroi extérieure du bouchon. Ces dispositifs sont relativement onéreux à cause des articulations qu'ils comportent, mais en outre, et surtout pour des bouchons de faible diamètre, les axes sont des pièces fragiles, sujettes à des ruptures. La rupture d'une telle pièce peut alors entrainer la présence incontrôlée d'un fragment métallique libre du côté non accessible de la paroi, ce qui peut être la cause de sérieux dommages à l'équipement concerné.

La présente invention vise en conséquence un bouchon expansible ne présentant pas les inconvénients précédemment cités. Le bouchon réalisé selon l'invention peut être mis en place par des opérations de manipulation extrêmement simples de façon à pouvoir être effectuées à distance par des appareils télécommandés. Ce bouchon peut aussi être mis en place en intervenant sur un seul côté de la paroi, et en comporte aucune pièce ou partie de pièce fragile.

L'invention concerne un bouchon expansible destiné à venir obturer un orifice ménagé dans une paroi accessible d'un seul côté, bouchon comportant une embase venant s'appliquer sur la face avant accessible de la paroi, autour de l'orifice, et au moins deux pièces d'agrippage munies chacune d'un épaulement radial, venant s'engager dans l'orifice de telle sorte que leur extrémité ressorte de l'autre côté de l'orifice, le bouchon comportant d'autre part une vis de commande située dans l'axe de l'orifice, dont la tête vient s'appliquer sur l'embase et dont la partie filetée vient se visser dans une pièce taraudée mobile longitudinalement et immobilisée en rotation et sur laquelle sont montées les pièces d'agrippage.

Selon l'invention les pièces d'agrippage sont montées coulissantes dans des évidements radiaux conjugués de la pièce taraudée pour permettre, par le déplacement longitudinal de la pièce taraudée vers la face arrière de la paroi, leur déplacement radial vers l'extérieur par pivotement dans les évidements jusqu'à ce que leurs épaulements viennent s'appliquer contre la face arrière de la paroi.

Selon une form particulière de réalisation de l'invention les pièces d'agrippage comportent au voisinage de leur extrémité arrière, un ergot radial pouvant se loger dans une gorge interne d'une pièce tubulaire liée à l'embase; par ailleurs la pièce taraudée présente, pour chaque évidement, une partie formant butée axiale pour la partie arrière des pièces d'agrippage.

D'autres caractéristiques et avantages de l'invention apparaîtront lors de la description détaillée d'un exemple de réalisation, cette description étant illustrée par les dessins annexés.

Les figures 1, 2 et 3 montrent un bouchon expansible selon l'invention, à trois stades successifs de l'opération de mise en place.

La figure 4 est une coupe transversale selon E—E de la figure 3.

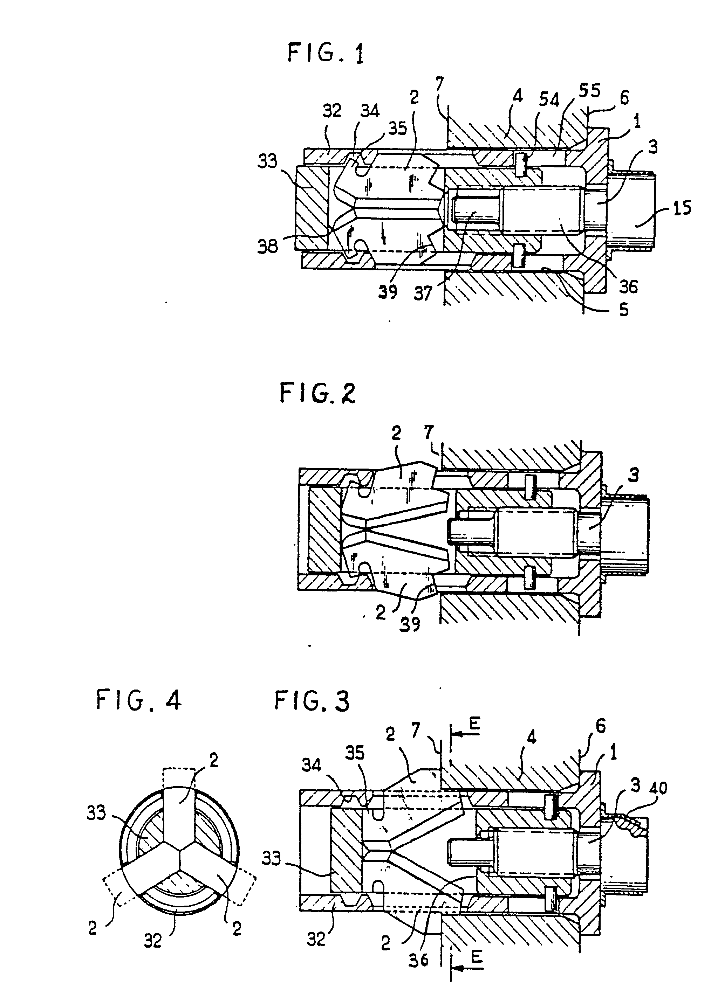

Selon les figures 1 à 4, le bouchon comprend une embase 1 avec un prolongement cylindrique 32 assez long pour traverser entièrement l'orifice 5 en débouchant de l'autre côté de la paroi. Ce prolongement 32 comporte un alésage interne dans lequel est disposée une pièce 33 mobile longitudinalement et immobile en rotation grâce à des pions 54 liés rigidement à la pièce 33 et engagés dans une rainure longitudinale 55 de la pièce 32. Le bouchon comprend aussi trois pièces d'agrippage 2 ayant chacune deux faces latérales parallèles de façon que ces pièces 2 puissent coulisser à l'intérieur de la pièce 33 et de la pièce 32, dans des évidements radiaux correspondants ménagés à la fois dans les pièces 32 et 33. La pièce 32 comporte en outre une rainure interne 34 dans laquelle vient s'engager un ergot 35 de chaque pièce d'agrippage 2. Le bouchon comprend enfin une vis 3 dont la tête vient s'appuyer contre l'embase 1, et dont le corps fileté 36 vient se visser dans un taraudage ménagé dans la pièce 33. La vis comporte en outre, en son extrémité, une partie cylindrique 37. On peut concevoir aussi ce même dispositif avec seulement deux pièces d'agrippage.

Pour la mise en place du bouchon on procédera de la manière suivante. La vis 3 étant dévissée et les pièces 2 étant rétractées à l'intérieur de la pièce 32, le bouchon est introduit dans l'orifice 5 de la paroi (figure 1). En faisant tourner la vis 3 on provoque le déplacement axial de la pièce 33 dont les faces internes 38 des évidements viennent buter sur l'extrémité arrière des pièces 2, provoquant une certaine rotation de ces pièces 2 et leur sortie partielle hors de la pièce 32. Cette rotation est obtenue du fait que l'ergot 35 des pièces 2 reste engagé dans la rainure 34. Le déplacement vers l'extérieur des pièces 2 met celles-ci dans une position telle qu'un épaulement 39 des pièces 2 vient s'engager contre la face arrière 7 de la paroi (figure 2). En continuant l'actionnement de la vis 3, on provoque une plus grande rotation des pièces 2 qui permet à leur ergot 35 de se dégager de la rainure 34. La pièce 33 continue de se déplacer longitudinalement en poussant les pièces 2 contre la paroi 7, ce qui provoque le blocage du bouchon sur cette paroi (figure 3).

Comme représenté figure 3, il est possible d'aménager sur l'embase 1 un dispositif de frein ou d'arrêt positif 40 adapté sur la tête 15 de la vis 3 et destiné au blocage de cette vis une fois le bouchon mis en place.

Pour retirer le bouchon on procèdera de la manière inverse en tournant la vis 3 dans le sens du dévissage. On repousse ainsi la pièce 33 vers la gauche sur les dessins, et les faces internes 36 des évidements viennent buter sur les pièces d'agrippage 2 pour les repousser également. Lorsque les pièces 2 dans leur mouvement vers la gauche viennent buter sur l'extrémité de l'évidement dans la pièce 32 elles pivotent dans un mouvement de rentrée à l'intérieur de la pièce 33, et leurs ergots 34 pénètrent à nouveau dans la gorge 34, reprenant ainsi la position représentée à la figure 1. Dans cette position l'ensemble du bouchon peut être retiré de l'orifice.

On pourra noter que le bouchon qui vient d'être décrit ne comporte qu'un nombre limité de pièces et que celles-ci ne présentent pas de zone de faible section sujette à rupture.

## Revendications

1. Bouchon expansible destiné à venir obturer un orifice (5) ménagé dans une paroi (4) accessible d'un seul côté, comportant une embase (1) venant s'appliquer sur la face avant (6) de la paroi (4) autour de l'orifice (5), au moins deux pièces d'agrippage (2) munies chacune d'un épaulement radial (39), venant s'engager dans l'orifice (5) de telle sorte que leur extrémité ressorte de l'autre côté de l'orifice (5), le bouchon comportant d'autre part une vis de commande (3) située dans l'axe de l'orifice, dont la tête (15) vient s'appliquer sur l'embase (1) et dont la partie filetée (36) vient se visser dans une pièce taraudée (33) mobile longitudinalement, immobilisée en rotation et sur laquelle sont montées les pièces d'agrippage (2), caractérisé par le fait que les pièces d'agrippage (2) sont montées coulissantes dans des évidements radiaux conjugués de la pièce (33), pour permettre, par le déplacement longitudinal de la pièce (33) vers la face arrière (7) de la paroi (4), leur déplacement radial vers l'extérieur par pivotement dans les évidements jusqu'à ce que leurs épaulements (39) viennent s'appliquer contre la face arrière (7).

2. Bouchon expansible selon revendication 1, caractérisé par le fait que les pièces d'agrippage (2) comportent chacune, au voisinage de leur extrémité arrière, un ergot radial (35) pouvant se loger dans une gorge interne (34) d'une pièce tubulaire (32) liée à l'embase (1), et par le fait que la pièce (33) présente, pour chaque évidement, une partie (38) formant butée axiale pour la partie arrière des pièces d'agrippage (2).

## Patentansprüche

1. Ausdehnbarer Verschlußstopfen zum Verschließen einer Öffnung (5), die in einer Wand (4) ausgebildet und nur von einer Seite her zugänglich ist, enthaltend eine Fußplatte (1), die um die Öffnung (5) herum an der Vorderseite (6) der Wand (4) in Anlage kommt, wobei wenigstens zwei jeweils mit einer radialen Schulter (39) versehene Anschlagstücke (2) mit der Öffnung (5) derart in Eingriff kommen können, daß ihr Ende auf der anderen Seite der Öffnung (5) herausragt, wobei der Verschlußstopfen andererseits eine in der Achse der Öffnung befindliche Steuerschraube (3) aufweist, deren Kopf (15) in Anlage an die Fußplatte (1) kommt und deren Gewindeteil (36) sich in ein mit Innengewinde versehenes bewegliches Stück (33) einschraubt, das in Längsrichtung beweglich ist, gegen Drehung festgelegt ist und an dem Anschlagstücke (2) montiert sind, dadurch gekennzeichnet, daß die Anschlagstücke (2) in einander zugeordneten radialen Ausnehmungen des Stücks (33) verschiebbar montiert sind, um durch die Längsverschiebung des Stücks (33) zur Rückseite (7) der Wand (4) durch Schwenken in den Ausnehmungen ihre radiale Verschiebung nach außen zu ermöglichen, bis ihre Schultern (39) in Anlage an die Rückseite (7) kommen.

2. Ausdehnbarer Verschlußstopfen nach Anspruch 1, dadurch gekennzeichnet, daß die Anschlagstücke (2) jeweils in Nähe ihres hinteren Endes einen radialen Vorsprung (35) aufweisen, der in eine innere Ringnut (34) eines mit der Fußplatte (1) verbundenen rohrförmigen Teils (32) eingreifen kann, und daß das Stück (33) für jede Ausnehmung einen Teil (38) aufweist, der für das Hinterteil der Anschlagstücke (2) eine axiale Anlage bildet.

**Claims**

1. Expanding plug intended for closing an aperture (5) provided in a wall (4) accessible from only one side, comprising a base (1) which is applied against the front face (6) of the wall (4) around the aperture (5), at least two gripping members (2) which are provided each with an outwardly extending radial shoulder (39) and which are inserted into the aperture (5) with their ends protruding on the other side of the aperture (5), the plug further comprising a screw control member (3) extending along the axis of the aperture (5), the head (15) of which comes to bear against the base (1) and the threaded body (36) of which comes to screw into a threaded member (33) movable longitudinally but immovable rotationally and on which the gripping members (2) are mounted, characterized by the fact that the gripping members (2) are mounted for sliding in radial corresponding recesses in the member (33), to effect, by the longitudinal displacement of the member (33) towards the rear face (7) of the wall (4), their radial displacement towards the outside through a pivoting displacement in the recesses until the shoulders (39) are applied against the rear face (7) of the wall.

2. Expanding plug according to claim 1, characterized by the fact that the gripping members (2) are each provided near their rear face with a radial projection (35) adapted to be received in an internal groove (34) of a tubular member (32) connected to the base (1), and by the fact that the member (33) has, for each recess, a part (38) constituting an axial stop for the rear part of the gripping members (2).

FIG. 1

FIG. 2

FIG. 4

FIG. 3